# EUROPÄISCHE PATENTSCHRIFT

(11) **EP 1 559 645 B1**
(45) Veröffentlichungstag und Bekanntmachung des Hinweises auf die Patenterteilung: **21.11.2007**
(21) Anmeldenummer: 04031038.5
(22) Anmeldetag: 30.12.2004
(51) Int. Cl.: B62K 19/36, B62H 5/00

(54) **Sattelstützen-Schloss für Zweiradfahrzeuge, wie Fahrräder und Motorräder**
Seat post lock for two-wheeled vehicles like bicycles and motorcycles
Dispositif de verrouillage du tube porte-selle de véhicules à deux roues comme des bicyclettes et des motocyclettes

(30) Priorität: 28.01.2004 ES 200400178; 19.10.2004 ES 200402491
(43) Veröffentlichungstag der Anmeldung: 03.08.2005
(73) Patentinhaber: Luma Industrias, S.A., 20120 Hernani (Guipúzcoa) (ES)
(72) Erfinder: Muerza Munilla, Alfredo, 20120 Hernani Guipuzcoa (ES)
(74) Vertreter: Feldkamp, Rainer

(56) Entgegenhaltungen:
- EP-A- 0 172 979
- FR-A- 869 214
- US-A- 4 971 345
- US-A- 5 380 061

## Beschreibung

### Gebiet der Erfindung

Diese Erfindung bezieht sich auf eine Sattelstützen-Schloss-Vorrichtung für Zweirad-Fahrzeuge, die an der Teleskop-Verbindung von Rohren zur Befestigung des Sattels eines Fahrrades angeordnet werden kann.

Diese Vorrichtung ist als eine Diebstahlsschutz-Einrichtung des an der Sattelstütze befestigten Elementes, wie z. B. des Sattels eines Fahrrades ausgelegt, das vorstehend und nachfolgend als Beispiel genannt wird.

### Stand der Technik

Auf diesem Gebiet sind Vorrichtungen bekannt, die eine allgemeine Konstruktion aufweisen, die eine Klemmschelle, einen Klemmbolzen, eine Welle, einen Hebel, einen exzentrischen Kopf des Hebels, einen Anschlag und einen Gegenhalter aufweisen, wobei die Klemmschelle ein Element des Fahrzeugrahmens umgreift, der Klemmbolzen die Enden der Klemmschelle durchquert, die Welle in ein Ende des Bolzens eingesetzt ist, der exzentrische Kopf des Hebels drehbar auf dieser Welle befestigt ist, der Anschlag sich an der Welle gegenüberliegendem Ende des Bolzens befindet und der Gegenhalter ortsverschieblich auf dem Klemmbolzen zwischen dem Anschlag und dem exzentrischen Kopf angeordnet ist. Das Element des Fahrzeugrahmens kann beispielsweise ein Sattelrohr sein, in das eine rohrförmige Sattelstütze zur Befestigung des Sattels teleskopartig eingesteckt und durch die Klemmschelle festlegbar ist

Diese Vorrichtungen ergeben keinen Diebstahlsschutz, sondern erfüllen lediglich den Zweck einer sicheren Befestigung des Sattels mittels einer Stellung des Hebels in einer Klemmstellung, in der die Klemmschelle kraftvoll die Sattelstütze umgreift und verhindert, dass sich der Sattel bewegt oder lockert. Auf diese Weise reicht es aus, den Hebel in seine entspannte Stellung zu bringen, damit der Sattel hinsichtlich seiner Position geändert oder aus dem Sattelrohr herausgezogen werden kann.

Andererseits ergibt sich hieraus, dass je luxuriöser und teurer die Fahrräder und ihre Teile sind, es um so mehr erforderlich ist, irgendein Diebstahlsschutzsystem für diesen Zweck einzusetzen.

Aus der US-A-4 971 345 ist ein Diebstahlsschutzsystem für den Sattel eines Zweirades bekannt, bei dem die Lage der Sattelstütze mit Hilfe einer Klemmschelle festgelegt ist, wobei ein Kunststoff ummanteltes Seil mit Schlaufen einerseits an dem Sattel selbst und andererseits an einer Strebe des Zweirades befestigt ist, um ein unberechtigtes Entfernen des Sattels so weit wie möglich zu verhindern. Ein Diebstahl des Zweirades selbst kann hierdurch nicht verhindert werden.

Der Erfindung liegt die Aufgabe zugrunde, ein Sattelstützen-Schloss der eingangs genannten Art zu schaffen, das ein Diebstahlsschutz-Element für den Sattel bildet und vorzugsweise auch die Diebstahlsicherung des Fahrzeuges selbst ermöglicht.

Diese Aufgabe wird durch die im Anspruch 1 angegebenen Merkmale gelöst.

Vorteilhafte Ausgestaltungen der Erfindung ergeben sich aus den Unteransprüchen.

Das erfindungsgemäße Sattelstützen-Schloss bildet ein Diebstahlsschutz-Element für den Sattel und ermöglicht bei bevorzugten Ausführungsformen gleichzeitig die Diebstahlsicherung des Fahrzeuges selbst, das an irgendeiner externen festen Stelle angeschlossen wird, wie z. B. einem Pfosten, einem Baum, einer Verankerung an einem Gebäude usw.

### Erläuterung der Erfindung und der Vorteile

Gegenüber diesem Stand der Dinge schlägt die vorliegende Erfindung ein Sattelstützen-Schloss für Zweirad-Fahrzeuge, wie Fahrräder und Motorräder vor, wobei das Schloss eine spezielle Konstruktion aufweist, die eine Welle aufweist, die als unabhängiges Element fest mit dem Klemmbolzen verbunden ist, wobei der Hebel drehbar auf dieser Welle befestigt ist und in seinem Inneren eine Anordnung aufweist, die in Radialrichtung zur Welle gerichtet ist und ausgehend von dieser zumindest einen verschiebbaren Riegel, einen verschiebbaren Schlosskörper, der mittels eines Schlüssels betätigt wird, und eine Schrauben-Druckfeder umfasst, wobei Blockiereinrichtungen zur Blockierung einer Drehung des Hebels gegenüber der Welle vorgesehen sind, die mittels der Betätigung des Schlüssels in Verbindung mit einer Verschiebung der inneren Anordnung des Hebels aktiviert werden, wobei der Riegel und der Schlosskörper jeweilige vorgeschobene und zurückgezogene Betriebsstellungen einnehmen können, die den aktiven und inaktiven Zuständen der Blockiereinrichtungen entsprechen, wobei in dem aktiven Zustand der Blockiereinrichtungen ein Verschwenken des Hebels um die Welle verhindert wird..

Ein weiteres Merkmal der Erfindung besteht darin, dass der Hebel eine Öffnung aufweist, die diesen von einer Seite zur anderen durchquert.

Gemäß diesen Vorgaben umfasst die Erfindung eine Variante, in der der Riegel einen Durchbrechung aufweist, der mit einer Kante versehen ist, die hinten und quer zur Betriebs-Vorwärtsbewegung des Riegels in Richtung auf die Welle angeordnet ist, wobei diese Durchbrechung in der zurückgezogenen und vorgeschobenen Betriebsstellungen des Riegels mit dem durch die Öffnung des Hebels gebildeten virtuellen Zylinder ausrichtbar ist oder mit ihrer Hinterkante in diesem virtuellen Zylinder eindringen kann, wobei die Hinterkante des Schlitzes ein gekrümmt konvexes Profil aufweist, das reziprok zu einer Einschnürung eines Sperr-Endstückes ist, das an einem Ende einer Diebstahlsschutz-Schlaufenkabels befestigt ist, das an seinem anderen Ende eine Schlaufe aufweist, die durch dieses Sperr-Endstück durchquert werden kann, wobei die Druckfeder zwischen dem Riegel und dem Schlosskörper derart angeordnet ist, dass die Feder ein Ende aufweist, das dauernd gegen einen vorderen Zapfen des Körpers anliegt, der bei seinem Betriebshub gleitend verschiebbar in einem hinteren Hohlraum des Riegels aufgenommen wird, wobei gleichzeitig diese Feder mit ihrem anderen Ende vollständig in eine im Boden des hinteren Hohlraumes angeordnete Vertiefung vollständig eingesetzt werden kann, wenn sie einen Zustand der maximalen Zusammendrückung annimmt, wenn der Riegel und der Körper ihre vorgeschobenen Betriebsstellungen aufweisen, wobei die eine Drehung des Hebels gegenüber der Welle verhindernden Blockiereinrichtungen darin bestehen, dass der Riegel eine ebene Vorderkante aufweist, die reziprok zu einer Abflachung ist, die am Umfang der Welle ausgebildet ist, wobei in der vorgeschobenen Betriebsstellung des Riegels diese Vorderkante gegen die Abflachung zur Anlage kommen kann.

Gemäß der vorstehend erläuterten Konstruktion wird die Diebstahlsschutzfunktion der Erfindung dadurch hervorgerufen, dass in der vorgeschobenen Stellung des Schlosskörpers die Feder in der Vertiefung des Hohlraumes des Riegels zusammengedrückt werden kann und dieser angetrieben wird, um ebenfalls seine vorgeschobene Stellung einzunehmen, in der seine ebene Vorderkante gegen die Abflachung der Welle zur Anlage kommt, wodurch verhindert wird, dass sich der Hebel gegenüber der Welle drehen kann. Diese vorgeschobene Stellung des Schlosskörpers und damit des Riegels ist blockierbar, weil in der Innenwand des Hebels eine Aussparung vorgesehen ist, die in ihrem Inneren ein Sperrstück aufnehmen kann, wenn dieses durch die Drehung des Schlüssels betätigt wird; in dieser vorgeschobenen Stellung dreht sich der Schlüssel in die Schließstellung und ruft somit eine axiale Blockierung hervor, während durch eine umgekehrte Drehung des Schlüssels die Öffnungsstellung eingenommen wird und die Wirkung der Feder den Schlosskörper in seine zurückgezogene Stellung antreibt und sich in einer Stellung mit elastischem Spiel befindet, um es zu ermöglichen, dass der Riegel zurückgezogen wird, so dass bei einem Bewirken des Öffnens des Hebels die Vorderkante des Riegels durch die Abflachung der Welle zurückgedrückt wird, die drehfest befestigt ist.

Diese Erfindung bietet, falls gewünscht, eine zusätzliche Leistung, die gleichzeitig die Befestigung des Fahrzeuges an einem Pfosten oder einem anderen Element zum Parken des Fahrzeuges mit einer Diebstahlssicherung ermöglicht, unter Einschluss des Hindurchführens des Schlaufenkabels durch das Rad, den Rahmen oder eines anderen Elementes, um dieses gegen einen Diebstahl zu sichern. Dies ergibt sich daraus, dass im offenen Zustand die Anordnung der Öffnung des Hebels und der Durchbrechung des Riegels das Einsetzen des Sperr-Endstückes nach dem Durchqueren der Schlaufe des Diebstahlsschutz-Schlaufenkabels ermöglicht, derart, dass bei dem weiter oben erläuterten Verschließen dieses Sperr-Endstück gegenüber dem Hebel verriegelt wird.

Eine weitere Variante gemäß der Erfindung besteht darin, dass der Riegel und der Schlosskörper miteinander unter relativer axialer Festlegung verbunden sind, wobei der Riegel verschiebbar in eine Kammer einsetzbar ist und an seinem vorderen Teil verjüngt ist und einen Schaft bildet, der den Boden der Kammer durchquert und an seinem Ende einen Zapfen trägt, der in der vorgeschobenen Stellung des Riegels in eine Aussparung der Welle eindringt, wobei die Schraubendruckfeder in der Kammer vollständig um den Hebel herum und zwischen der Vorderseite des Riegels und dem Boden der Kammer angeordnet ist. Bei dieser Variante verfügt man nicht über die zusätzliche Leistung eines Diebstahlsschutz-Schlaufenkabels für das Fahrzeug.

Eine weitere Variante, die eine Kombination der vorstehenden Varianten ist, besteht darin, dass der Riegel und der Schlosskörper miteinander in Axialrichtung fest verbunden sind, wobei der Riegel verschiebbar in eine Kammer einsetzbar ist und an seinem vorderen Ende verjüngt ist und einen Schaft bildet, dessen Spitze gegen eine Kugel oder Rolle angelegt werden kann, die teilweise aus der Kammer an einem Teil vorspringt, der reziprok zu einer Einbuchtung ist, die in einem Sperrzapfen gegenüberliegend zu einer ebenen Seite ausgebildet ist, die in die Öffnung gleitend eintritt und an einem ebenen Abschnitt zur Anlage kommt, der am Umfang der Welle ausgebildet ist.

In allen Varianten erfolgt die Blockierung der vorgeschobenen Stellung des Schlosskörpers so, wie dies für die erste Ausführungsform erläutert wurde.

Außerdem sind bei allen Ausführungsformen zwei Merkmale der Erfindung möglich, die sich auf die Art der Einstellung der effektiven Länge des Klemmbolzens entsprechend dem Durchmesser der Sattelstange beziehen. Gemäß einer dieser Ausführungsformen ist der Klemmbolzen durch die Welle hindurch in selektiv änderbarer Weise eingeschraubt und er ist an seinem anderen Ende erweitert und bildet einen einstückigen Kopf mit einer Form, die für Werkzeuge zum Bewirken einer Drehung nicht zugänglich ist. Gemäß einer anderen Ausführungsform der Einstellung ist dieser Klemmbolzen durch die Welle in selektiv veränderbarer Weise eingeschraubt und am anderen Ende dieses Bolzens ist der Anschlag in diese Welle eingeschraubt und weist eine Außenform auf, die für Werkzeuge zum Bewirken einer Drehung unzugänglich ist, wobei der Anschlag auf der Seite, die an der Klemmschelle anliegt, Mittel aufweist, die für das Ansetzen dieser Werkzeuge für eine Drehbetätigung ausgebildet sind. Beide dieser Einstellarten werden dadurch unzugänglich und damit diebstahlsicher, wenn das Schloss verschlossen ist.

Bei der vorstehend beschriebenen Konstruktion des Sattelstützen-Schlosses sind Blockiereinrichtungen zur Blockierung einer Drehung oder eines Verschwenkens des Hebels gegenüber der Welle vorgesehen, die mittels der Betätigung des Schlüssels in Verbindung mit einer Verschiebung der in dem Hebel angeordneten Anordnung betätigbar sind, wobei der der Riegel und der Schließkörper in der Lage sind, jeweilige vorgeschobene und zurückgezogene Stellungen einzunehmen, die den aktiven und nicht aktiven Zuständen der Blockiereinrichtungen entsprechen. Hierbei nimmt die durch den Riegel und den Schlosskörper gebildete Einheit die axiale Kraft auf, die im Schließzustand des Schlosses erzeugt wird, und die durch die Reaktion der stirnseitigen Abflachung der Welle erzeugt wird, wenn mit Gewalt ein Öffnen in dem Schließzustand des Schlosses versucht wird; diese axiale Kraft wird in eine Scherkraft umgewandelt, die auf den Verriegelungsteil des Schlosses einwirkt, der die Aufgabe hat, eine sichere und feste Befestigung des Schlosskörpers im Inneren des Körpers des Hebels sicherzustellen. Diese Erscheinung kann eine Beschädigung an dem Verriegelungsteil hervorrufen, die vermieden werden sollte.

Gemäß einer weiteren Ausführungsform bestehen daher die Einrichtungen zur Drehblockierung des Hebels gegenüber der Welle darin, dass der Riegel einen vorderen Vorsprung aufweist, der quer zu dem Klemmbolzen und parallel und in Längsrichtung bezüglich der Welle verläuft wobei dieser stirnseitige Vorsprung zwei ebene Seiten aufweist, die bezüglich der längsgerichteten Betriebsverschiebung des Riegels eine achsparallele Seite und eine Stirnseite senkrecht zueinander sind, die am Ende dieser Betriebsverschiebung mit jeweiligen Wänden gekoppelt sind, die eine winkelförmige Aussparung in der Welle bilden, die bezüglich dieser Verschiebung eine Querwand und eine Seitenwand aufweist, wobei die Querwand gegen die Stirnseite anliegt und die Seitenwand gegen die achsparallele Seite und vor dieser bezüglich der Drehbewegung des Hebels angeordnet sind, die im Sinne eines Lösens des Schlosses in geöffnetem Zustand des Schlosses wirkt.

Gemäß dieser Konstruktion und im Schließzustand des Schlosses wird nicht die geringste axiale Kraft auf die Festlegung des Körpers des Schlosses ausgeübt, wie dies weiter oben beschrieben wurde. Andererseits wird die Festlegung der Schließstellung des Schlosses erreicht, weil die Seitenwand der winkelförmigen Aussparung in der Achse gegen die achsparallele Seite des vorderen Vorsprunges des Riegels anliegt, wodurch verhindert wird, dass sich der Hebel gegenüber der Welle drehen kann und dass das Schloss auf andere Weise geöffnet werden kann, als durch Aufschließen des Schlosses, weil der Riegel nicht nach hinten gedrückt werden kann.

Bei dieser Ausführungsform kann der verschiebbare Schlosskörper der Schlosskörper eines Schlosses sein, das mittels eines Schlüssels betätigt wird. Außerdem kann dieser verschiebbare Schlosskörper in bevorzugter Weise der Kern eines Schließsystems mit einer durch Einstellräder gebildeten Schließkombination sein, die in der gültigen Öffnungsstellung die Freigabe des Kerns ermöglichen, während in jeder anderen Stellung der Öffnungskombination diese Einstellräder diesen Kern in einem vorgeschobenen Zustand halten, der dem Schließzustand des Schlosses entspricht, das heißt, zum Verschließen des Schlosses muss man das Schlossgeheimnis kennen und auf den Schlosskörper drücken, um diesen zusammen mit dem Riegel in die Position zu bringen, in der sich der Hebel nicht gegenüber der Welle drehen kann, worauf die Einstellräder auf irgendeine andere unterschiedliche Position gedreht werden, damit diese Schließstellung beibehalten wird, worauf bei einer erneuten Drehung der Einstellräder auf die richtige Schlüsselstellung der Schlosskörper wieder zurückgezogen und die Öffnung des Schlosses ermöglicht werden kann, wodurch diese vorher verhinderte Drehung des Hebels ermöglicht wird.

### Zeichnungen und Bezugsziffern

Zum besseren Verständnis der Eigenart der vorliegenden Erfindung ist in den beigefügten Zeichnungen eine bevorzugte Ausführungsform einer gewerblichen Ausführungsform gezeigt, die lediglich den Charakter eines erläuternden, jedoch nicht beschränkenden Beispiels hat.
Die Figur 1 ist eine Ansicht des Schlosses in der verschlossenen Stellung entlang eines längsverlaufenden Mittelschnittes, wobei in diese Zeichnung das Sperr-Endstück (15) in seiner Stellung bezüglich der Kupplung mit dem Hebel (4) gezeigt ist.
Die Figur 2 ist der Schnitt II-II nach Figur 1; hierbei sind der Schlüssel (10) und das Sperr-Endstück (15) fortgelassen.
Die Figur 3 ist wie die Figur 2, bezieht sich jedoch auf die Öffnungsstellung.
Die Figur 4 ist wie die vorhergehenden Figuren und zeigt den Vorgang des Drehens des Hebels (4) obwohl dessen Darstellung falsch ist weil dieser in Längsrichtung bei der Drehung in Richtung auf den Betrachter verkürzt sein müsste.
Die Figur 5 ist eine Vergrößerung der Einzelheit V, die in Figur 2 angegeben ist.
Die Figur 6 zeigt das Diebstahlsschutz-Schlaufenkabel (17) mit dem Sperr-Endstück (15) und der Schlaufe (18).
Die Figuren 7 und 8 sind äquivalent zu der Figur 1 und zeigen eine weitere Ausführungsform in der offenen bzw. verschlossenen Stellung.
Die Figuren 9 und 10 sind äquivalent zu den Figuren 7 bzw. 8 und zeigen eine weitere Ausführungsform.
Die Figur 11 zeigt getrennt den Teil des Sperrzapfens (32), der in den Figuren 9 und 10 enthalten ist.
Die Figur 12 zeigt die Unteransicht der Figur 11.
Die Figur 13 zeigt einen Klemmbolzen (2) gemäß einer von der Figur 1 abweichenden Ausführungsform.
Die Figur 14 ist eine perspektivische auseinandergezogene Ansicht einer weiteren Ausführungsform der Erfindung.
Die Figur 15 ist ein orthogonale Projektionsansicht bei frontaler Betrachtung der Aussparung der Welle (3).
Die Figur 16 ist eine Unteransicht entsprechend der Figur 15.
Die Figur 17 ist der Schnitt IV-IV, der in Figur 15 gezeigt ist, und in den der vordere Vorsprung (26) in seiner nicht mit der Welle (3) gekoppelten Position eingefügt ist.
Die Figuren 18 und 19 sind jeweilige der Figur 14 vergleichbare Darstellungen. Die Figur 18 entspricht dem geöffneten Zustand, während Figur 19 dem verschlossenen Zustand entspricht.

In diesen Figuren sind die folgenden Bezugsziffern angegeben:
1.- Klemmschelle
2.- Schaft
3.- Welle
4.- Hebel
5.- Exzentrischer Kopf des Hebels (4)
6.- Anschlag des Schaftes (2)
7.- Gegenhalter des Schaftes (2)
8.- Verschiebbarer Riegel
9.- Verschiebbarer Schlosskörper
10.- Schlüssel
11.- Schrauben-Druckfeder
12.- Öffnung des Hebels
13.- Durchbrechung des Riegels (8)
14.- Kante der Durchbrechung (13)
15.- Sperr-Endstück
16.- Einschnürung des Sperr-Endstückes (15)
17.- Diebstahlsschutz-Schlaufenkabel
18.- Schlaufe der Schlaufenkabels (17)
19.- Vorderer Zapfen des Schlosskörpers (9)
20.- Hinterer Hohlraum des Riegels (8)
21.- Vertiefung in dem Hohlraum (20)
22.- Kante des Riegels (8)
23.- Abflachung der Welle (3)
24.- Aussparung in dem Hebel (4)
25.- Sperrstück des Schlosses
26.- Kammer des Hebels (4)
27.- Schaft des Riegels (8)
28.- Spitze des Schaftes (27)
29.- Aussparung der Welle (3)
30.- Kugel
31.- Aussparung des Sperrzapfens (32)
32.- Sperrzapfen
33.- Ebene Seite des Zapfens (32)
34.- Ebener Abschnitt der Welle (3)
35.- Einstückiger Kopf des Klemmbolzens (2)
36.- Vorderer Vorsprung des verschiebbaren Riegels (8)
37.- Achsparallele Seite des vorderen Vorsprunges (36)
38.- Stirnseite des vorderen Vorsprunges (36)
39.- Querwand der winkelförmigen Ausnehmung der Welle (3)
40.- Seitenwand der winkelförmigen Ausnehmung der Welle (3)

### Erläuterung einer bevorzugten Ausführungsform

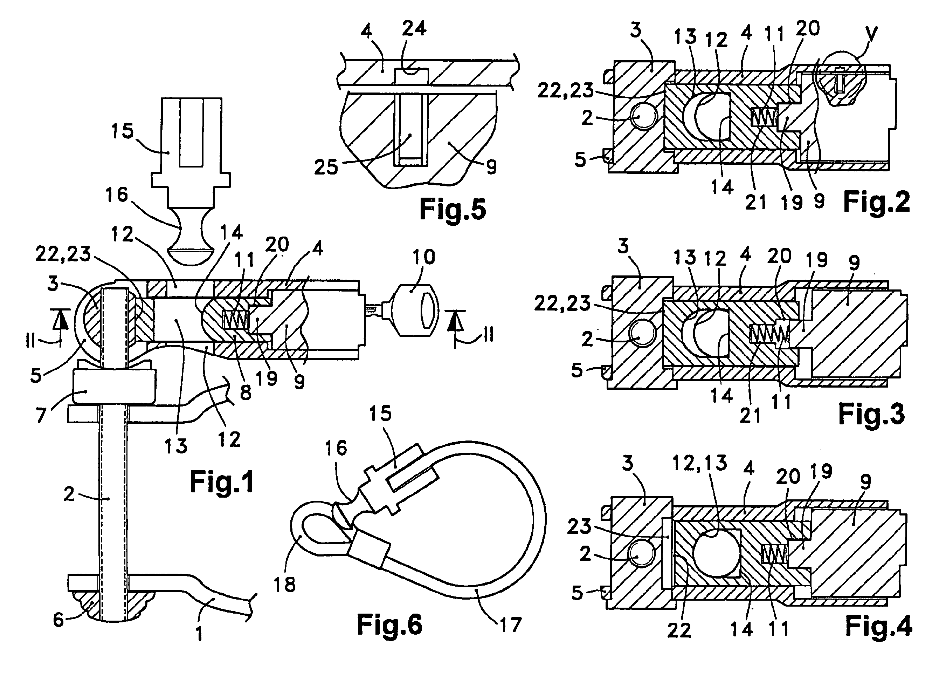

Anhand der bereits genannten Figuren und Bezugsziffern sind in den beigefügten Zeichnungen der wesentliche Grundgedanke der Erfindung sowie einige Ausführungsformen hiervon dargestellt, die sich auf ein Sattelstützen-Schloss für Zweiradfahrzeuge beziehen, das einer allgemeinen Konstruktion entspricht, die, wie dies in Figur 1 zu erkennen ist, eine Klemmschelle (1), einen Klemmbolzen (2), eine Welle (3), einen Hebel (4), einen exzentrischen Kopf (5) des Hebels (4), einen Anschlag (6) und ein Gegenstück (7) umfasst, wobei die Klemmschelle (1) ein Element des Fahrgestells des Fahrzeuges umgreift, der Klemmbolzen (2) die Enden der Klemmschelle (1) durchquert, die Welle (3) an einem Ende des Klemmbolzen (2) angeordnet ist, der exzentrische Kopf (5) des Hebels (4) drehbar auf der Welle (3) befestigt ist, der Anschlag (6) an dem der Welle (3) gegenüberliegenden Ende des Klemmbolzens (2) angeordnet ist und das Gegenstück (7) ortsverschiedlich auf dem Klemmbolzen (2) zwischen dem Anschlag (6) und dem exzentrischen Kopf (5) angeordnet ist.

In dieser Figur 1 sind die wesentlichen Bestandteile der Erfindung dargestellt, die eine Welle (3) umfassen, die als unabhängiges Element fest mit dem Bolzen (2) verbunden ist, wobei der Hebel (4) drehbar auf dieser Welle (3) befestigt ist und in seinem Inneren eine Anordnung aufweist, die in Radialrichtung auf die Welle (3) gerichtet ist, und die ausgehend von dieser zumindest einen verschiebbaren Riegel (8), einen verschiebbaren Schlosskörper (9), der über einen Schlüssel (10) betätigt wird, und eine Druck-Schraubenfeder (11) umfasst, wobei Blockiereinrichtungen zur Blockierung einer Drehung des Hebels (4) gegenüber der Welle (3) vorgesehen sind, die durch eine Betätigung des Schlüssels (10) in Verbindung mit einer Verschiebung der in dem Hebels (4) vorgesehenen Anordnung aktiviert werden, wobei der Riegel (8) und der Schlosskörper (9) jeweilige vorgeschobene und zurückgezogene Betriebsstellungen einnehmen können, die den aktiven bzw. nicht aktiven Zustand dieser Blockiereinrichtungen entsprechen.

Weiterhin ist in dieser Figur 1 eine Variante der Erfindung gezeigt, bei der: der Hebel (4) eine Öffnung (12) komplementär zu einem Sperr-Endstück (15) aufweist; der Riegel (8) eine Durchbrechung (13) aufweist, die mit einer Kante (14) versehen ist, die am hinteren Ende und quer bezüglich des Arbeitsvorschubes des Riegels (8) in Richtung auf die Welle (3) angeordnet ist, wobei in der zurückgezogenen und vorgeschobenen Betriebsstellungen dieses Riegels (8) diese Durchbrechung (13) von einem virtuellen Zylinder umschrieben werden kann, der durch die Öffnung des Hebels (4) umgrenzt ist, bzw. die Durchbrechung mit ihrer Hinterkante (14) in diesen virtuellen Zylinder eindringen kann, wobei diese Hinterkante (14) der Durchbrechung (13) ein gekrümmt konvexes Profil aufweist, das reziprok zu einer Einschnürung (16) in dem Sperr-Endstück (15) ist, das am Ende eines Diebstahlsschutz-Schlaufenkabels (17) eingebaut ist, das an seinem anderen Ende eine Schlaufe (18) aufweist, die von dem Sperr-Endstück (15) durchquert werden kann. Die Druckfeder (11) ist zwischen dem Riegel (8) und dem Schlosskörper (9) derart angeordnet, dass die Feder (11) mit einem Ende dauernd gegen einen vorderen Zapfen (19) des Körpers (9) anliegt, der bei seinem Betriebshub gleitend in einem hinteren Hohlraum (20) des Riegels (8) angeordnet wird, wobei gleichzeitig die Feder (11) mit ihrem anderen Ende in einer Vertiefung (21) angeordnet ist, die in dem Boden des hinteren Hohlraumes (20) ausgebildet ist, wobei die Feder (11) vollständig in diese Vertiefung (21) eingedrückt werden kann und einen Zustand der maximalen Zusammendrückung gegenüber dem Riegel (8) und dem Schlosskörper (9) annimmt, wenn diese ihre vorgeschobenen Betriebsstellungen einnehmen, wobei die Blockiereinrichtungen zur Blockierung der Drehbewegung des Hebels (4) gegenüber der Welle (3) darin bestehen, dass der Riegel (8) eine ebene Vorderkante (22) aufweist, die reziprok zu einer Abflachung (23) ist, die am Umfang der Welle (3) ausgebildet ist, wobei in der vorgeschobenen Betriebsstellung des Riegels (8) diese Vorderkante (22) gegen die Abflachung (23) anliegen kann, wobei entsprechend der vorgeschobenen Betriebsstellung des Schlosskörpers (9) in der Innenwand des Hebels (4) eine Aussparung (24) vorgesehen ist, die in ihrem Inneren ein Sperrstück (25) des Schlosses aufnehmen kann, wenn durch eine Drehung des Schlüssels (10) ein Schließen des Schlosses bewirkt wird.

Die Wirkungsweise des erfindungsgemäßen Schlosses ist einfach. Ausgehend von der in Figur 3 gezeigten offenen Stellung wird der Schlosskörper (9) auf seine vorgeschobene Stellung bewegt, die Feder (11) wird im Inneren der Vertiefung (21) zusammengedrückt, und die Einheit aus diesem Schlosskörper (9) und dem Riegel (8) kann starr in eine Position vorgeschoben werden, in der die Vorderkante (22) gegen die Abflachung (23) der Welle (3) gedrückt wird. Um diese Position zu blockieren, erfolgt eine Drehung des Schlüssels (10), damit (Figuren 2 und 5) das Sperrstück (25) des Schlosses in die Aussparung (24) in dem Hebel eindringt. Beim Herausziehen des Schlüssels (10) wird diese Situation aufrechterhalten, was verhindert, dass sich der Hebel (4) gegenüber der Welle (3) dreht. Bei einer Drehung des Schlüssels (10) in der entgegengesetzten Richtung (Figur 3) wird der Körper (9) nach hinten angetrieben, und wenn der Hebel (5) in Drehung betätigt wird, ruft die Wirkung der Vorderkante (22) auf die unbewegliche Abflachung (23) eine Antriebskraft (Figur 4) zum Zurückschieben des Riegels (8) hervor, die erfolgen kann, weil die elastische Zusammendrückbarkeit der Feder (11) zur Verfügung steht. Wie man aus der Relativstellung der Öffnung (12) und des Schlitzes (13) in den Figuren 3 und 4 erkennen kann, ist es in der Öffnungsstellung möglich, das Sperr-Endstück (15) einzusetzen, während in eingestecktem Zustand der Übergang auf die Verschlussstellung ein Herausziehen des Endstückes verhindert, was die Möglichkeit ergibt, dass die Schlinge (17) als Diebstahlsschutz für das Fahrzeug verwendet wird.

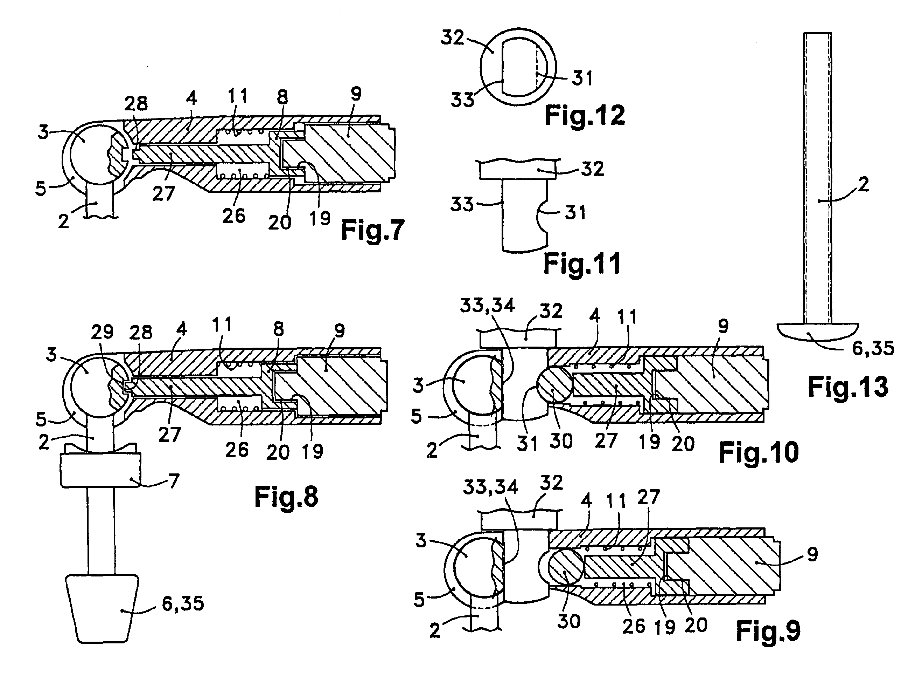

Bei der Ausführungsform nach den Figuren 7 und 8 ist weder eine Öffnung (12) noch eine Durchbrechung (13) vorgesehen, so dass hier keine Möglichkeit der Verwendung eines zusätzlichen Diebstahlsschutz-Schlaufenkabels besteht. Grundlegend ergeben sich die Verschluss- und Öffnungsstellungen wie bei der ersten Ausführungsform, jedoch mit der Besonderheit, dass hier der Riegel (8) und der Körper (9) immer einstückig miteinander verbunden sind. Zu diesem Zweck werden der Riegel (8) und der Schlosskörper (9) miteinander in einer axialen Weise fest verbunden, und der Riegel (8) ist verschiebbar in eine Kammer (26) eingesetzt und verjüngt sich an seinem vorderen Teil, wodurch ein Schaft (27) gebildet wird, der den Boden der Kammer (26) durchquert und an seinem Ende einen Zapfen (28) aufweist, der in der vorgeschobenen Stellung des Riegels (8) in eine Aussparung (29) der Welle (3) eingesetzt ist, wobei die Schraubendruckfeder (11) in der Kammer (26) um den Schaft (27) herum und zwischen der Stirnseite des Riegels (8) und dem Boden der Kammer (26) angeordnet ist.

Bei der Ausführungsform nach den Figuren 9 und 10 sind der Riegel (8) und der Schlosskörper (9) wie bei der vorhergehenden Ausführungsform (Figuren 7 und 8) miteinander verbunden, und aufgrund der Notwendigkeit eines Sperrzapfens (32) hierin ist eine Öffnung (12) in dem Hebel (4) vorgesehen, in die dieser Sperrzapfen (32) eines Diebstahlsschutz-Schlaufenkabels (17) eingesetzt werden kann, wobei das Verschließen und Öffnen mit Hilfe einer Kugel (30) erreicht wird. Zu diesem Zweck sind der Riegel (8) und der Schlosskörper (9) miteinander axial unbeweglich verbunden, wobei dieser Riegel (8) gleitend in einer Kammer (26) angeordnet und an seinem vorderen Teil verjüngt ist, wodurch ein Zapfen (27) gebildet wird, dessen Spitze gegen die Kugel (30) angelegt werden kann, die teilweise aus der Kammer (26) heraus in einem Teil vorspringt, der reziprok zu einer Einbuchtung (31) ist, die in dem Sperrzapfen (32) gegenüberliegend zu einer ebenen Seite (33) angeordnet ist, die in die Öffnung (12) gleitend eindringt und gegen einen ebenen Abschnitt (34) anliegt, der am Umfang der Welle (3) ausgebildet ist.

Gemäß der Erfindung gibt es zwei bevorzugte Lösungen für den Klemmbolzen (2). Eine dieser Lösungen besteht darin, dass der Klemmbolzen (2) in selektiv änderbarer Weise durch die Welle (3) hindurch eingeschraubt ist und an seinem anderen Ende eine Erweiterung aufweist, die einen einstückigen Kopf (35) mit einer Form bildet, die für Werkzeuge für eine Drehbetätigung unzugänglich ist; eine mögliche Form hierfür ist in der Figur 13 gezeigt, während eine weitere mögliche Form in Figur 8 gezeigt ist. Eine weitere bevorzugte Lösung für den Klemmbolzen (2) besteht darin (Figur 1), dass der Klemmbolzen (2) durch die Welle (3) in selektiv änderbarer Weise eingeschraubt ist und an dem anderen Ende dieses Klemmbolzens (2) der Anschlag (6) in die Welle (3) eingeschraubt ist und eine Außenform aufweist, die für Werkzeuge für eine Drehbetätigung unzugänglich ist, wobei auf seiner Seite, die aus der Klemmschelle (1) hervorspringt, dieser Anschlag (6) Einrichtungen aufweist, die für die Anwendung derartiger Werkzeuge für eine Drehbetätigung geeignet sind. In jedem Fall kann der Klemmbolzen (2) in verschlossenem Zustand des Schlosses nicht betätigt werden.

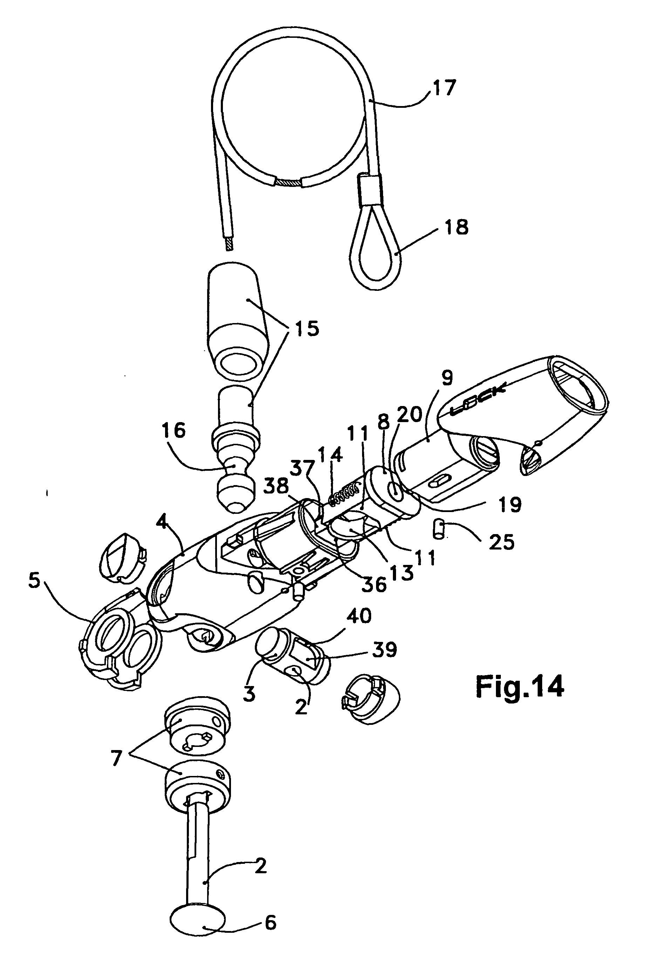

In den Figuren 14 bis 19 ist eine weitere Ausführungsform des Sattelstützen-Schlosses für Zweiradfahrzeuge wie Fahrräder und Motorräder dargestellt, die einer allgemeinen Konstruktion entspricht, die Folgendes umfasst: eine Klemmschelle (1), einen Klemmbolzen (2), eine Welle (3), einen Hebel (4) einen exzentrischen Kopf (5) des Hebels (4), einen Anschlag (6) und ein Gegenstück (7), wobei die Klemmschelle (1) ein Element des Rahmens des Fahrzeuges umgreift, der Klemmbolzen (2) die Enden der Klemmschelle (1) durchquert, die Welle (3) in einem Ende des Klemmbolzens (2) angeordnet ist, der exzentrische Kopf (5) des Hebels (4) drehbar auf der Welle (3) befestigt ist, der Anschlag (6) an dem Ende des Klemmbolzens angeordnet ist, das der Welle (3) gegenüberliegt, und das Gegenstück (7) ortsverschiebbar auf dem Klemmbolzen (2) zwischen dem Anschlag (6) und dem konzentrischen Kopf (5) derart angeordnet ist, wie dies in Figur 14 gezeigt ist.

Wie dies in dieser Figur 14 gezeigt ist, bestehen die Blockiereinrichtungen zur Blockierung einer Drehung des Hebels (4) gegenüber der Welle (3) darin, dass der Riegel (8) einen vorderen Vorsprung (36) aufweist, der sich quer zu dem Klemmbolzen (2) erstreckt und parallel und in Längsrichtung bezüglich der Welle (3) angeordnet ist. Dieser vordere Vorsprung (26) weist zwei ebene Seiten auf, die bezüglich der längsgerichteten Arbeitsbewegung des Riegels (8) durch eine achsparallele Seite (37) und eine Stirnseite (38) gebildet sind, die zueinander senkrecht sind und die am Ende des Arbeitshubes mit jeweiligen Wänden koppelbar sind, die eine winkelförmige Ausnehmung in der Welle (3) bilden und bezüglich dieses Arbeitshubes eine Querwand (39) und eine Seitenwand (40) umfassen, wobei die Querwand (39) gegen die Stirnseite (36) und die Seitenwand (40) gegen die achsparallele Seite (37) anliegt, während sie vor dieser bezüglich der Drehbewegung des Hebels (4) im Sinne einer Öffnung des Schlosses im offenen Zustand des Schlosses liegt.

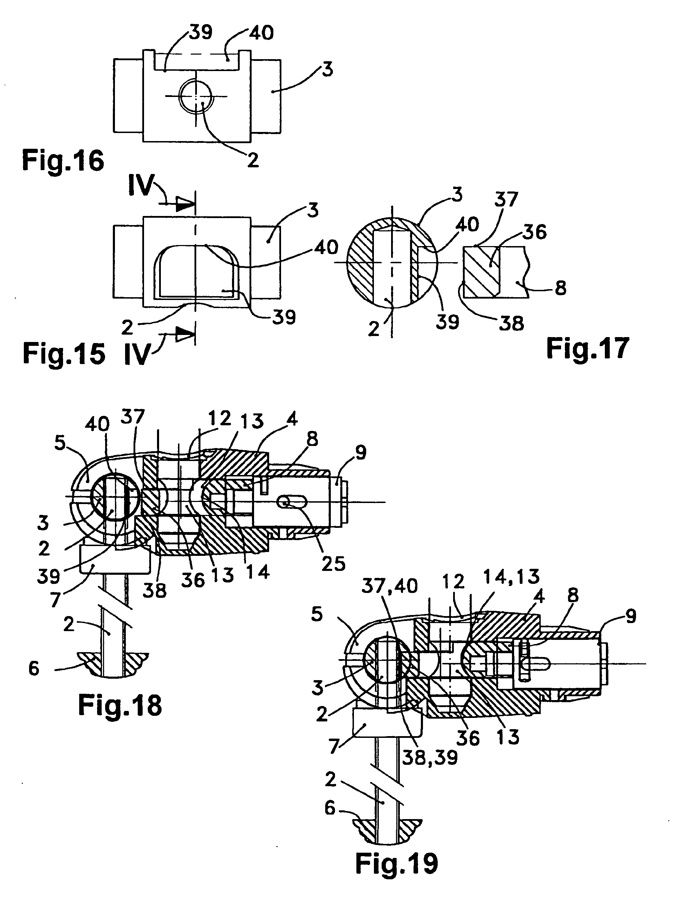

Die Form der Welle (3) ist klar aus den Figuren 15-17 zu erkennen, und zwar ebenso wie aus der Figur 14. Insbesondere die Figur 17 zeigt, wie die Funktionalität dieser Elemente insgesamt die Betriebsweise des Schlosses ergibt.

Die Funktionsweise dieser Lösung ist insbesondere zum besseren Verständnis aus einem Vergleich der Figuren 18 und 19 zu erkennen. Ausgehend von der offenen Stellung des Schlosses, die in Figur 18 gezeigt ist, führt ein axialer Druck auf den Schlosskörper dazu, dass dieser in Richtung auf die Welle (3) verschoben wird, wobei der Riegel (8) in der gleichen Richtung mitgenommen wird. Auf diese Weise wird schließlich die Schließstellung nach Figur 19 erreicht. Zur Durchführung dieser Antriebsbewegung muss der eigentliche Schlossmechanismus sich in seinem offenen Zustand befinden. Sobald er die abschließende Antriebsstellung erreicht hat, reicht es aus, das Schloss in den verschlossenen Zustand zu bringen, damit diese vorgeschobene Stellung beibehalten wird, bis bei einer erneuten Betätigung des Schlosses dieses in den offenen Zustand zurückkehrt und elastisch seine nicht vorgeschobene Stellung einnimmt, die das Zurückziehen des Riegels (8) ermöglicht. Der Schlosskörper (9) kann mit Hilfe eines Schlüssels (10) betätigt werden, wobei diese Möglichkeit in allen Zeichnungen gezeigt ist. Dies heißt, dass der offene und verschlossene Zustand jeweils mit Hilfe einer geeigneten Betätigung des Schlüssels (10) erreicht werden. Bei der Ausführungsform nach den Figuren 14-19 kann jedoch auch eine Lösung vorgesehen werden, bei der der verschiebbare Schlosskörper (9) den eigentlichen Kern eines Kombinationsschlosses mit einzelnen Einstellrädern bildet, wobei in der dem Schlossgeheimnis entsprechenden Stellung dieser den Kern bildende Schlosskörper frei verschiebbar ist, während in jeder anderen Stellung diese Einstellräder den Kern in dem vorgeschobenen Zustand halten, der der Schließstellung des Schlosses entspricht. Das heißt mit anderen Worten, dass in diesem Fall die Einstellräder des Kombinationsschlosses die Funktion des Schlüssels (10) im vorstehenden Fall übernehmen.

## Patentansprüche

1. Sattelstützen-Schloss für Zweiradfahrzeuge, wie Fahrräder und Motorräder, mit einer Klemmschelle (1), einem Klemmbolzen (2), einer Welle (3), einem Hebel (4), einem exzentrischen Kopf (5) des Hebels (4), einem Anschlag (6) und einem Gegenstück (7), wobei die Klemmschelle (1) ein Element des Rahmens des Fahrzeuges umgreift, der Klemmbolzen (2) die Enden der Klemmschelle (1) durchquert, die Welle (3) an einem Ende des Klemmbolzens (2) angeordnet ist, der exzentrische Kopf (5) des Klemmbolzens (4) drehbar auf der Welle (3) befestigt ist, der Anschlag (6) an dem Ende des Klemmbolzens (2) gegenüberliegend zu der Welle (3) angeordnet ist und das Gegenstück (7) ortsverschieblich auf dem Klemmbolzen (2) zwischen dem Anschlag (6) und dem exzentrischen Kopf (5) angeordnet ist, wobei die Welle (3) als ein unabhängiges Element fest mit dem Klemmbolzen (2) gekoppelt ist, der Hebel (4) drehbar auf der Welle (3) befestigt ist und in seinem Inneren eine Anordnung aufweist, die in Radialrichtung auf die Welle (3) gerichtet ist und ausgehend von dieser zumindest einen verschiebbaren Riegel, einen verschiebbaren Schlosskörper (9), der mittels eines Schlüssels (10) oder eines Schlosssystems mit einer Schlosskombination mit Einstellrädern betätigbar ist, und eine Druckschraubenfeder (11) umfasst, und wobei Blockiereinrichtungen zur Blockierung einer Drehung des Hebels (4) gegenüber der Welle (3) vorgesehen sind, die mittels der Betätigung des Schlüssels (10) oder der Einstellräder in Verbindung mit einer Verschiebung der Anordnung im Inneren des Hebels (8) betätigbar sind, bei der der Riegel (8) und der Schlosskörper jeweilige vorgeschobene und zurückgezogene Betriebsstellungen einnehmen können, die den aktiven und nicht aktiven Zuständen der Blockiereinrichtungen entsprechen.

2. Sattelstützen-Schloss nach Anspruch 1, wobei der Hebel (4) wahlweise mit einer Öffnung (12) versehen ist, die komplementär zu einem Sperr-Endstück (15) ist.

3. Sattelstützen-Schloss nach Anspruch 1 oder 2, wobei der Riegel (8) eine Durchbrechung (13) aufweist, die mit einer Kante (14) versehen ist, die am hinteren Ende und quer zur Betriebs-Vorschubbewegung des Riegels (8) in Richtung auf die Welle (3) angeordnet ist, und wobei bezüglich der zurückgezogenen und vorgeschobenen Betriebsstellungen dieses Riegels die Durchbrechung (3) einen virtuellen Zylinder umschreiben kann, der durch die Öffnung des Hebels (4) definiert ist, oder diese Hinterkante (14) in den virtuellen Zylinder eindringen kann.

4. Sattelstützen-Schloss nach Anspruch 3, wobei die Kante (14) der Durchbrechung (13) ein gekrümmt konvexes Profil aufweist, das reziprok zu einer Einschnürung (16) in einem Sperr-Endstück (15) ist, die an dem Ende eines Diebstahlsschutz-Schlaufenkabels (17) angeordnet ist, das an seinem anderen Ende eine Schlaufe (18) aufweist, die von dem Sperr-Endstück (15) durchquerbar ist.

5. Sattelstützen-Schloss nach den vorhergehenden Ansprüchen, wobei die Druckfeder (11) zwischen dem Riegel (8) und dem Schlosskörper (9) derart eingebaut ist, dass die Feder (11) ein dauernd gegen einen vorderen Zapfen (19) des Schlosskörpers (9) anliegendes Ende aufweist, der bei seinem Betriebshub gleitend in einem hinteren Hohlraum (20) des Riegels (8) eingeschoben wird, wobei gleichzeitig die Feder (11) mit ihrem anderen Ende in einer Vertiefung (21) angeordnet ist, die in dem Boden des hinteren Hohlraumes (20) ausgebildet ist, wobei die Feder (11) in dieser Vertiefung (21) vollständig aufgenommen werden kann und einen Zustand der maximalen Zusammendrückung einnimmt, wenn der Riegel (8) und der Schlosskörper (9) ihre vorgeschobenen Betriebsstellungen einnehmen.

6. Sattelstützen-Schloss nach den vorhergehenden Ansprüchen, wobei die Blockiereinrichtungen zur Blockierung einer Drehung des Hebels (4) gegenüber der Welle (3) darin bestehen, dass der Riegel (8) eine ebene Vorderkante (22) aufweist, die reziprok zu einer Abflachung (23) ist, die am Umfang der Welle (3) vorgesehen ist, und wobei in der vorgeschobenen Betriebsstellung des Riegels (8) diese Vorderkante (22) gegen die Abflachung (23) anliegt.

7. Sattelstützen-Schloss nach einem der Ansprüche 1 bis 4, wobei der Riegel (8) und der Schlosskörper (9) miteinander in Axialrichtung fest verbunden sind, wobei der Riegel (8) gleitend in eine Kammer (26) eingebaut ist und an seinem vorderen Ende verjüngt ist, wodurch ein Schaft (27) gebildet wird, der den Boden der Kammer (26) durchquert und an seinem Ende einen Zapfen (28) aufweist, der in der vorgeschobenen Stellung des Riegels (8) in eine Aussparung (29) der Welle (3) eindringt, und wobei die Schraubendruckfeder (11) in der Kammer (26) um den Schaft (27) herum und zwischen der Stirnseite des Riegels (8) und dem Boden der Kammer (26) angeordnet ist.

8. Sattelstützen-Schloss nach den Ansprüchen 1 und 2, wobei der Riegel (8) und der Schlosskörper (9) miteinander in Axialrichtung starr verbunden sind, der Riegel (8) gleitend in einer Kammer (26) angeordnet ist und an seinem vorderen Teil eine Verjüngung aufweist, die einen Schaft (27) bildet, dessen Spitze gegen eine Kugel (30) anliegt, die teilweise aus der Kammer (26) an einer Stelle vorspringt, die reziprok zu einer Einbuchtung (31) ist, die in einem Sperrzapfen (32) gegenüberliegend zu einer ebenen Seite (33) ausgebildet ist, die in die Öffnung (2) gleitend eindringt und gegen einen ebenen Abschnitt (34) anliegt, der am Umfang der Welle (3) ausgebildet ist.

9. Sattelstützen-Schloss nach den vorhergehenden Ansprüchen, wobei bezüglich der vorgeschobenen Betriebsstellung des Schlosskörpers (9) in der Innenwand des Hebels (4) eine Aussparung (24) vorgesehen ist, die in ihrem Inneren ein Sperrstück (25) des Schlosses aufnehmen kann, wenn dieses durch Drehen des Schlüssels (10) in seine Schließstellung bewegt wird.

10. Sattelstützen-Schloss nach den vorhergehenden Ansprüchen, wobei der Klemmbolzen durch die Welle (3) in selektiv veränderbarer Weise eingeschraubt ist und an seinem anderen Ende erweitert ist und einen einstückigen Kopf (5) mit einer Form bildet, der für Werkzeuge für eine Drehbetätigung unzugänglich ist.

11. Sattelstützen-Schloss nach einem der Ansprüche 1 bis 9, wobei der Klemmbolzen (2) durch die Welle (3) in selektiv veränderbarer Weise eingeschraubt ist und am anderen Ende dieses Klemmbolzens (2) der Anschlag (6) in die Welle (3) eingeschraubt ist und eine Außenform aufweist, die für Werkzeuge für eine Drehbetätigung unzugänglich ist, wobei auf seiner aus der Klemmschelle (1) vorspringenden Seite dieser Anschlag (6) Einrichtungen aufweist, die für den Ansatz dieser Werkzeuge für eine Drehbetätigung ausgebildet sind.

12. Sattelstützen-Schloss nach Anspruch 1, wobei die Blockiereinrichtungen zur Blockierung der Drehung des Hebels (4) gegenüber der Welle (3) darin besteht, dass der Riegel (8) einen vorderen Vorsprung (36) aufweist, der quer zu dem Klemmbolzen (2) und gleichzeitig parallel und längsgerichtet bezüglich der Welle (3) ist, dass der vordere Vorsprung (36) zwei ebene Seiten aufweist, die bezüglich der Betriebsverschiebung des Riegels (8) eine achsparallele Seite (37) und eine Stirnseite (38) sind, die zueinander senkrecht stehen, und die bei der Betriebsverschiebung mit jeweiligen Wänden in Berührung kommen, die eine winkelförmige Ausnehmung in der Welle (3) bilden, der bezüglich dieser Verschiebung durch eine Querwand (39) und eine Seitenwand (40) gebildet ist, wobei die Querwand (39) zur Anlage gegen die Stirnseite (38) kommt und die Seitenwand (40) gegen die achsparallele Seite (37) zur Anlage kommen kann, und vor dieser bezüglich der Drehbewegung des Hebels (4), die im Sinne einer Öffnung des Schlosses im entriegelten Zustand des Schlosses gerichtet ist.

13. Sattelstützen-Schloss nach Anspruch 12, wobei der verschiebbare Schlosskörper ein durch einen Schlüssel (10) betätigbarer Schlosskörper ist.

14. Sattelstützen-Schloss nach einem der Ansprüche 1 bis 12, mit einem Schlosssystem mit einer Schlosskombination mit Einstellrädern, wobei der gleitend verschiebbare Schlosskörper (9) den Kern des Schlosssystems mit Einstellrädern bildet, die in der gültigen Drehstellung für eine Öffnung ein Verschieben des Kerns ermöglichen, während in jeder anderen Stellung der Räder diese Einstellräder den Kern in einem vorgeschobenen Zustand halten, der der Schließstellung des Schlosses entspricht.

## Claims

1. Lock for saddle support for two-wheeled vehicles, as for example bicycles or motorbikes, with a clamp (1), a hold-down bolt (2), a shaft (3), a lever (4), an eccentric head (5) for the lever (4), a stop (6) and an antagonic piece (7), enveloping the clamp (1), an element of the vehicle frame, crossing the hold-down bolt (2) the ends of the clamp (1), with the shaft (3) placed at one end of the hold-down bolt (2), the eccentric head (5) of the hold-down bolt (4) being secured in the shaft (3) in a rotating manner, the stop (6) being placed on the end of the hold-down bolt (2) opposite the shaft (3) and the antagonic piece (7) placed so that it can move, on the hold-down bolt (2) between the stop (6) and the eccentric head (5). The shaft (3) is coupled as an independent element firmly to the hold-down bolt (2), the lever (4) is secured in the shaft (3) in a rotating manner and with a device on the inside that points towards the shaft (3) in radial direction and which, starting from this, has at least one moving lock, one moving lock body (9), activated by a key (10) or a lock system with a lock combination with adjustment wheels, and a setscrew spring (11). There are locking devices to lock a rotation of the lever (4) opposite the shaft (3), which can be activated by means of the activity of the key (10) or the adjustment wheels together with a movement of the device on the inside of the lever (8), where the lock (8) and the lock body can receive the respective service position forwards and backwards, which correspond to the active and non-active state of the locking devices.

2. Lock for saddle support in agreement with claim 1, where the lever (4) has optionally been provided with an opening (12) in addition to a final locking piece (15).

3. Lock for saddle support in agreement with claim 1 or 2, where the lock (8) has an opening (13) that has an edge (14) that is placed on the rear end and crosswise to the service advance movement of the lock (8) towards the shaft (3), and a virtual cylinder, defined by the opening of the lever (4), which can delimit the opening (3), with respect to the forward and backward service position of this lock, or where this rear edge (14) can penetrate the virtual cylinder.

4. Lock for saddle support in agreement with claim 3, where the edge (14) of the opening (13) has a bent convex-shaped profile, reciprocal to a narrowing (16) on a final locking piece (5), which is placed at the end of a anti-theft protection loop cable (17), which has a hose (18) on its other end, which can be crossed by the final locking piece (15).

5. Lock for saddle support in agreement with the previous claims, with a compression spring (11) mounted between the lock (8) and the lock body (9) in such a manner that the spring (1) continuously presents an adjacent end opposite a front pivot (19) of the lock body (9), which in its service elevation, slides into a rear cavity (20) of the lock (8). Likewise the other end of the spring (11) is placed in a depression (21), formed in the base of the rear cavity (20), such depression (21) being able to entirely receive the spring (11), and adopting a maximum compression state when the lock (8) and the lock body (9) adopt their forward service positions.

6. Lock for saddle support in agreement with the previous claims, with the locking devices to lock consisting of a rotation of the lever (4) opposite the shaft (3) where the lock (8) has a flat front edge (22), reciprocal to a flattening (23), which is foreseen in the circumference of the shaft (3), and with this front edge (22) being in contact with the flattening (23) in forward service position of the lock (8).

7. Lock for saddle support in agreement with one of the claims from 1 to 4, where the lock (8) and the body lock (9) are firmly joined together in axial direction, where the lock (8) slides into a chamber (26) narrowing at its front end, so that it forms a column (27), which crosses the base of the chamber (26) and which on its end has a pivot (28), which, in forward position of the lock (8) penetrates a notch (29) of the shaft (3), and with the setscrew spring (11) in the chamber (26) around the column (27) and between the front side of the lock (8) and the base of the chamber (26).

8. Lock for saddle support in agreement with claims 1 and 2, where the lock (8) and the lock body (9) are firmly joined together in axial direction, where the lock (8) slides into a chamber (26), with a narrowing on its front end that forms a column (27), whose tip is in contact with a ball (30), which partly stands out from the chamber (26) at a reciprocal point to a cove (31), which is formed in a locking pivot (32) opposite a flat side (33), which slides into the opening (2) and which is in contact with a flat section (34) which is formed in the circumference of the shaft (3).

9. Lock for saddle support in agreement with the previous claims, with a lever (4) on the inner wall, with respect to the front service position of the lock body (9), a notch (24) which can receive a locking piece (25) of the lock on its interior when it is moved when the key (10) is turned in its lock position.

10. Lock for saddle support in agreement with the previous claims, with the hold-down bolt (2) screwed by means of the shaft (3) in such a way that it can be selectively modified, and narrowed on its other end and forming a head of a piece (5) which is inaccessible for tools for activation by rotation.

11. Lock for saddle support in agreement with one of the claims from 1 to 9, where the hold-down clamp (2) is screwed by means of the shaft (3) in such a way that it can be selectively modified and where the stop (6) is screwed into the shaft (3) at the other end of this hold-down bolt (2), and where the outside is inaccessible for tools for activation by rotation. This stop (6) has devices on the side that stands out from the clamp (1), which are formed for the stop of these tools.

12. Lock for saddle support in agreement with claim 1, consisting of the locking devices to lock the rotation of the lever (4) opposite the shaft (3) where the lock (8) has a front projection (36) which is placed crosswise to the hold-down lever (2) and at the same time parallel and longitudinal with respect to the shaft (3), where the front projection (36) has two flat sides, which, with respect to the service movement of the lock (8), have one side parallel to the axle (37) and one front side (38), which are vertical with respect to each other and which in service movement enter into contact with the respective walls, that form an angled notch in the shaft (3), which with respect to this movement, is comprised of a transverse wall (3) and a side wall (40), pressing the transverse wall (3) against the front side (3) and where the side wall (40) can press against the side parallel to the axle (37), and in front of this with respect to the rotation movement of the lever (4), which for the purpose of opening the lock, is adapted in the unlocked state of the lock.

13. Lock for saddle support in agreement with claim 12, where the sliding lock body is a lock body that can be activated by means of a key (10).

14. Lock for saddle support in agreement with one of the claims from 1 to 12, with a lock system with a lock combination with adjustment wheels, the core of the lock system with adjustment wheels forming the lock body (9) movement by sliding, which permit movement of the core in valid rotation position for opening, whilst in any other position of the wheels, these adjustment wheels keep the core in a forward state, which corresponds to the closed position of the lock.

## Revendications

1. Serrure pour support de selle pour les véhicules à deux roues comme, par exemple, les bicyclettes ou les motocyclettes, avec un collier de fixation (1), un boulon de fixation (2), un arbre (3), un levier (4), une tête excentrique (5) du levier (4), une butée (6) et une pièce antagonique (7), le collier de fixation (1) enveloppant un élément du cadre du véhicule, le boulon de fixation (2) traversant les extrémités du collier de fixation (1), l'arbre (3) étant disposé à une extrémité du boulon de fixation (2), la tête excentrique (5) du boulon de fixation (4) étant fixé à l'arbre (3) de façon à tourner, la butée (6) étant disposée à l'extrémité du boulon de fixation (2) en face de l'arbre (3) et la pièce antagonique (7) étant disposée de façon à pouvoir se déplacer sur le boulon de fixation (2) entre la butée (6) et la tête excentrique (5), l'arbre (3) étant accouplé, comme élément indépendant, fixement au boulon de fixation (2), le levier (4) étant fixé sur l'arbre (3) de façon à tourner et présentant à l'intérieur un dispositif qui est tourné vers l'arbre (3) dans une direction radiale et qui, en partant de celui-ci, se compose, au moins, d'un verrou déplaçable, d'un corps de serrure déplaçable (9), actionné au moyen d'une clé (10) ou d'un système de serrure comportant une combinaison de fermeture à rouages d'ajustement, et un ressort à vis de serrage (11) et des dispositifs de blocage étant fournis pour bloquer une rotation du levier (4) vis-à-vis de l'arbre (3), qui peuvent être actionnés en agissant sur la clé (10) ou les rouages d'ajustement, en même temps qu'un déplacement du dispositif à l'intérieur du levier (8) dans lequel le verrou (8) et le corps de serrure peuvent prendre les positions respectives de service en avant et en arrière, qui correspondent à l'état actif ou inactif des dispositifs de blocage.

2. Serrure pour support de selle, conformément à la revendication 1, le levier (4) étant doté facultativement d'un orifice (12) qui est complémentaire d'une pièce finale de blocage (15).

3. Serrure pour support de selle, conformément à la revendication 1 ou 2, le verrou (8) présentant une ouverture (13) dotée d'un rebord (14) qui est disposé à l'extrémité postérieure et dans le sens transversal par rapport au mouvement d'avance de service du verrou (8), dans la direction de l'arbre (3) et pouvant délimiter l'ouverture (3) par rapport aux positions de service vers l'avant et vers l'arrière de ce verrou, un cylindre virtuel, défini par l'orifice du levier (4) ou avec la possibilité pour ce rebord postérieur (14) de pénétrer dans le cylindre virtuel.

4. Serrure pour support de selle, conformément à la revendication 3, le rebord (14) de l'ouverture (13) présentant un profil recourbé qui a une forme convexe, à l'opposite d'un rétrécissement (16) sur une pièce finale de blocage 5), qui est disposé à l'extrémité d'un câble à boucle de protection antivol (17), qui présente, à son autre extrémité, un tuyau flexible (18), qui peut ètre traversé par la pièce finale de blocage (15).

5. Serrure pour support de selle, conformément aux revendications antérieures, le ressort de compression (11) étant monté entre le verrou (8) et le corps de la serrure (9), de telle sorte que le ressort (11) présente une extrémité adjacente de façon continue vis-à-vis d'un pivot avant (19) du corps de la serrure (9) qui, lors de son soulèvement de service, est introduit par glissement dans une cavité postérieure (20) du verrou (8), le ressort (11) étant disposé, en même temps, avec son autre extrémité, dans une dépression (21) formée à la base de la cavité postérieure (20), le ressort (11) pouvant être complètement reçu dans cette dépression (21) et adoptant un état de compression maximale, lorsque le verrou (8) et le corps de la serrure (9) adoptent leurs positions de service vers l'avant.

6. Serrure pour support de selle, conformément aux revendications antérieures, les dispositifs de blocage consistant à bloquer une rotation du levier (4) par rapport à l'arbre (3) dans lequel le verrou (8) présente un rebord antérieur plat (22) à l'opposite d'un aplatissement (23), qui est prévu sur la circonférence de l'arbre (3) et ce rebord antérieur (22) étant en contact avec l'aplatissement (22) dans la position de service vers l'avant du verrou (8).

7. Serrure pour support de selle conformément à l'une des revendications 1 à 4, le verrou (8) et le corps de la serrure (9) étant assemblés fixement entre eux dans une direction axiale, le verrou (8) étant monté par glissement dans une chambre (26) et se rétrécissant à son extrémité antérieure, formant ainsi une tige (27) qui traverse la base de la chambre (26) et qui, à son extrémité, présente un pivot (28) qui, dans la position vers l'avant du verrou (8), pénètre dans une encoche (29) de l'arbre (3), et le ressort à vis de serrage (11) étant disposé dans la chambre (26) autour de la tige (27) et entre le côté frontal du verrou (8) et la base de la chambre (26).

8. Serrure pour support de selle conformément aux revendications 1 et 2, le verrou (8) et le corps de la serrure (9) étant assemblés fixement entre eux dans une direction axiale, le verrou (8) étant disposé par glissement dans uen chambre (26) et présentant, dans sa partie antérieure, un rétrécissement qui forme une tige (27) dont la pointe est en contact avec une bille (30) qui ressort en partie de la chambre (26) en un point à l'opposite d'une anse (31) qui se forme sur un pivot de blocage (32) en face d'un côté plat (33), qui pénètre dans l'ouverture (2) par glissement et qui est en contact avec une section plane (34) qui se forme sur la circonférence de l'arbre (3).

9. Serrure pour support de selle conformément aux revendications antérieures, une encoche (24) étant pratiquée dans la paroi intérieure du levier (4) par rapport à la position de service vers l'avant du corps de la serrure (9), entaille (24) qui peut recevoir à l'intérieur une pièce de blocage (25) de la serrure, lorsque cette dernière est déplacée en tournant la clé (10) jusqu'à sa position de fermeture.

10. Serrure pour support de selle conformément aux revendications antérieures, le boulon de fixation (2) étant vissé au moyen de l'arbre (3), de telle sorte qu'il peut ètre modifié de façon sélective, et étant élargi à son autre extrémité et formant une tête d'une pièce (5) qui a une forme qui le rend inacessible aux outils en vue de son actionnement moyennant rotation.

11. Serrure pour support de selle conformément à l'une des revendications 1 à 9, le boulon de fixation (2) étant vissé au moyen de l'arbre (3), de telle sorte qu'il peut être modifié de façon sélective, et la butée (6) étant vissée à l'arbre (3) à l'autre extrémité de ce boulon de fixation (2), et présentant une forme extérieur qui le rend inaccessible aux outils pour son actionnement moyennant rotation, sur son côté qui ressort du collier de fixation (1), des dispositifs qui sont formés par la butée de ces outils.

12. Serrure pour support de selle conformément à la revendication 1, les dispositifs de blocage consistant à bloquer la rotation du levier (4) vis-à-vis de l'arbre (3), où le verrou (8) présente une saillie antérieure (36), qui est transversale par rapport au boulon de fixation (2) et, en même temps, parallèle et longitudinale par rapport à l'arbre (3) où la saillie antérieure (36) présente deux côtés plats qui sont, par rapport au déplacement de service du verrou (8), d'une part, un côté parallèle à l'axe (37) et, de l'autre, un côté frontal (38), qui se trouvent à la verticale l'un par rapport à l'autre et qui, lors du déplacement de service, entrent en contact avec les parois respectives qui forment une échancrure en forme d'angle dans l'arbre (3), qui est formé, par rapport à ce déplacement, par une paroi transversale (39) et une paroi latérale (40), la paroi transversale (39) comprimant le côté frontal (38) et la paroi latérale (40) pouvant comprimer le côté parallèle à l'axe (37) et, devant celui-ci, par rapport au mouvement de rotation du levier (4) qui, en vue de l'ouverture de la serrure, est ajusté dans l'état débloqué de la serrure.

13. Serrure pour support de selle, conformément à la revendication 12, le corps de la serrure déplaçable étant un corps de serrure pouvant être actionné au moyen d'une clé (10).

14. Serrure pour support de selle, conformément à l'une des revendications 1 à 12, comportant un système de fermeture avec une combinaison à serrure ayant des rouages d'ajustement, le corps de la serrure (9), déplaçable par glissement, formant le noyau du système de fermeture à rouages d'ajustement, qui permettent un déplacement du noyau dans la position de rotation valable pour une ouverture, tandis que dans une autre position quelle qu'elle soit des rouages, ces rouages d'ajustement maintiennent le noyau dans un état vers l'avant, qui correspond à la position de fermeture de la serrure.
